# EUROPÄISCHE PATENTSCHRIFT

(11) **EP 1 186 185 B1**
(45) Veröffentlichungstag und Bekanntmachung des Hinweises auf die Patenterteilung: **07.12.2005**
(21) Anmeldenummer: 99924642.4
(22) Anmeldetag: 18.06.1999
(51) Int. Cl.: H04Q 7/22

(54) **VERFAHREN UND SYSTEM, UM MOBILEN TEILNEHMERN ANONYME STANDORTABHÄNGIGE DIENSTE ANZUBIETEN**
METHOD AND SYSTEM FOR OFFERING MOBILE SUBSCRIBERS ANONYMOUS, LOCATION-BASED SERVICES
PROCEDE ET SYSTEME POUR OFFRIR A DES ABONNES MOBILES DES SERVICES ANONYMES DEPENDANT DE L'EMPLACEMENT

(43) Veröffentlichungstag der Anmeldung: 13.03.2002
(73) Patentinhaber: Swisscom Mobile AG, 3050 Bern (CH)
(72) Erfinder: HUBER, Adriano, CH-6600 Locarno (CH); LAUPER, Eric, CH-3012 Bern (CH)
(74) Vertreter: P&TS Patents & Technology Surveys SA
(86) Internationale Anmeldenummer: PCT/CH1999/000265
(87) Internationale Veröffentlichungsnummer: WO 2000/079811

(56) Entgegenhaltungen:
- WO-A-97/41654
- WO-A-98/21913
- WO-A-98/59506
- US-A- 5 561 704

## Beschreibung

### Technisches Gebiet

Die vorliegende Erfindung betrifft ein Verfahren gemäss dem Oberbegriff des Anspruchs 1 und ein System gemäss dem Oberbegriff des Anspruchs 23, um Mobilteilnehmern standortabhängige Dienste anzubieten.

### Stand der Technik

Die steigende Nachfrage nach Mobilität und ortsunabhängiger Arbeit und Freizeit hat einen erheblichen Aufschwung der Mobilkommunikation verursacht. In den meisten Ländern werden mehrere analoge und/oder digitale Mobilfunknetze angeboten, die beispielsweise auf Basis der bekannten Standards AMPS, GSM oder UMTS funktionieren. Diese ursprünglich vorwiegend für die Sprachkommunikation konzipierten Mobilfunknetze dienen mehr und mehr auch für den Datentransport. Aber auch Benutzer ohne Mobilgerät wollen immer öfter an verschiedenen Standorten arbeiten und telefonieren können. Anwender, die von verschiedenen Endgeräten/Rechnern auf das Internet zugreifen, oder Benutzer, die in einem Fixnetz (beispielsweise einem PSTN, ISDN oder PLC-Netz) mit einem Passwort oder einer Chipkarte identifiziert werden, gelten demnächst auch als Mobilteilnehmer.

Die Attraktivität von Mobilnetzen wird durch eine Vielzahl unterschiedlicher Dienste zusätzlich gesteigert, die oft von privaten Dienstanbietern angeboten werden. Hohe Sicherheitsansprüche werden jedoch benötigt, damit Benutzer vertrauensvoll auf diese Dienste zugreifen. Mobilteilnehmer verlangen beispielsweise, dass der Inhalt der übermittelten Daten nicht an Dritte, möglicherweise nicht einmal an den Betreiber des Mobilnetzes, weitergeleitet wird. Ausserdem müssen die Teilnehmer und die Dienstanbieter zuverlässig authentifiziert werden, beispielsweise mittels TTP-Verfahren (Trusted Third Party), und es müssen gesicherte Geldtransaktionsprozesse vorgesehen werden.

Standortabhängige Dienste werden seit kurzem von vielen Dienstanbietern offeriert. Als typische Beispiele von standortabhängigen Diensten, die Mobilteilnehmer interessieren können, kann man beispielsweise Wetter- und Verkehrsinformationen, lokale Werbung, lokales Unterhaltungsprogramm, verfügbare Parkplätze, Flughafeninformationen für Passagiere und ähnliches erwähnen. Standortabhängige Applikationen ermöglichen es, den Teilnehmern in Abhängigkeit ihres momentanen Standorts verschiedene Informationen oder Programme (Applets) zu senden.

Um solche Dienste anbieten zu können, müssen die Dienstanbieter jedoch den momentanen Standort der nachfragenden Teilnehmer erfahren können, was aus Sicherheitsgründen von den meisten Teilnehmern nicht erwünscht wird. Die meisten Teilnehmer würden beispielsweise nicht akzeptieren, dass private Dritte detaillierte Bewegungsprofile erstellen und in Datenbanken aufbewahren. Aus datenschutzrechtlichen Gründen weigern sich ausserdem viele Mobilfunkbetreiber, den momentanen Standort von Mobilteilnehmern an Drittfirmen weiterzugeben.

Die Patentanmeldung DE-A1-196 38 072 beschreibt ein Verfahren, um die Anonymität von Mobilteilnehmern gegenüber fremden Dienstanbietern zu gewährleisten. Gemäss diesem System wird die Identität des Mobilteilnehmers durch ein Alias ersetzt. Dem Dienstanbieter wird nur dieses Alias mit dem Standort des Teilnehmers übertragen; die wahre Identität des Mobilteilnehmers kann er jedoch nicht erfahren. Andere ähnliche Systeme verwenden sogenannte "Remailers", um die Identität der Teilnehmer zu anonymisieren.

Es wurde ausserdem vorgeschlagen, die angebotenen standortabhängigen Dienste und Informationen in einen von einem vertrauenswürdigen Operator (beispielsweise vom Mobilfunkbetreiber) verwalteten Server (einen sogenannten Proxy) zu kopieren. Dieser Operator ermittelt den Standort des nachfragenden Teilnehmers und antwortet mit einer lokal gespeicherten Kopie des Dienstes oder der Information von Drittdienstanbietern. Solche Proxies sind jedoch bekanntlich schwer zu aktualisieren; ausserdem können viele Dienste nicht in einem Proxy ausgeführt werden.

WO-A-98/21913 beschreibt ein System, um Adressen von Geschäften in der Umgebung anzubieten. Das System erlaubt nur, die physische Adresse von Geschäften zu finden, deren Sitz sich in derselben Zone (LA, Location Area) wie der Mobilteilnehmer befindet und ist zum Beispiel nicht dazu geeignet, die elektronische Adresse von Unternehmen zu finden, die sich physisch in einer anderen Zone befinden, die aber auch Mobilteilnehmern in dieser Zone Dienstleistungen anbieten.

WO-A-98/59506 beschreibt ein Verfahren, um standortabhängige URL-Adressen über SMS im Broadcastmodus an alle Mobilteilnehmer in einer Zone zu senden. Auch hier werden nur Adressen von Unternehmen übermittelt, die sich physisch in der Nähe des Mobilteilnehmers befinden.

US-A-5,561,704 offenbart ein Verfahren, um standortabhängige Telefonnummern zu finden. Der Mobilteilnehmer muss selbst seinen Standort eingeben, was sich als unpraktisch erweist. Es werden nur Telefonnummern von Unternehmen übermittelt, die sich physisch in der Nähe des Mobilteilnehmers befinden.

WO-A-97/41654 beschreibt ein Verfahren, um standortabhängige Informationen in Abhängigkeit von gespeicherten Benutzerprofilen an Mobilteilnehmer zu senden. Dieses Verfahren erlaubt es nicht, die elektronische Adresse von standortabhängigen Diensten zu finden.

### Zusammenfassung der Erfindung

Es ist daher ein Ziel dieser Erfindung, ein neues Verfahren und ein neues System vorzuschlagen, um Mobilteilnehmern standortabhängige Dienste anzubieten, ohne dass der Standort der Mobilteilnehmer vom

Betreiber des Mobilnetzes an Dritte weitergeleitet wird und ohne dass die Anforderungen des Datenschutzes verletzt werden.

Ein anderes Ziel ist es, ein Verfahren und ein System vorzuschlagen, die von Mobilteilnehmern in jeder Art von Mobil- und/oder Fixnetz verwendet werden können. Das Verfahren und das System müssen beispielsweise von Mobilfunkteilnehmern in einem Mobilfunknetz anwendbar sein, aber auch von Fix- und PLC-Netzbenutzern (Power-Line Communication-Netzbenutzer), die sich persönlich und unabhängig vom benutzten Endgerät mit einem Identifizierungsmodul oder mit einem Passwort im Netz identifizieren lassen.

Erfindungsgemäss werden die Ziele durch die unabhängigen Ansprüche 1 und 23 gelöst. Vorteilhafte Varianten sind in den abhängigen Ansprüchen angegeben.

### Kurze Beschreibung der Zeichnungen

Die vorliegende Erfindung wird mit Hilfe der als Beispiel angeführten Beschreibung besser verständlich, welche durch die folgenden Figuren illustriert wird:
Die Figur 1 zeigt ein Blockschema, das die wichtigsten Komponenten eines Telekommunikationssystems gemäss einem Beispiel der Erfindung zeigt.
Die Figuren 2a, b zeigen eine Variante der Erfindung, in welcher die von den Dienstanbietern angegebenen geographischen Bereiche Zellen in einem Mobilfunknetz entsprechen.
Die Figuren 3a, b zeigen eine Variante der Erfindung, in welcher die von den Dienstanbietern angegebenen geographischen Bereiche durch geographische Koordinaten definiert sind.
Die Figuren 4a, b zeigen eine Variante der Erfindung, in welcher die von den Dienstanbietern angegebenen geographischen Bereiche politischen Bereichen entsprechen.

### Wege zur Ausführung der Erfindung

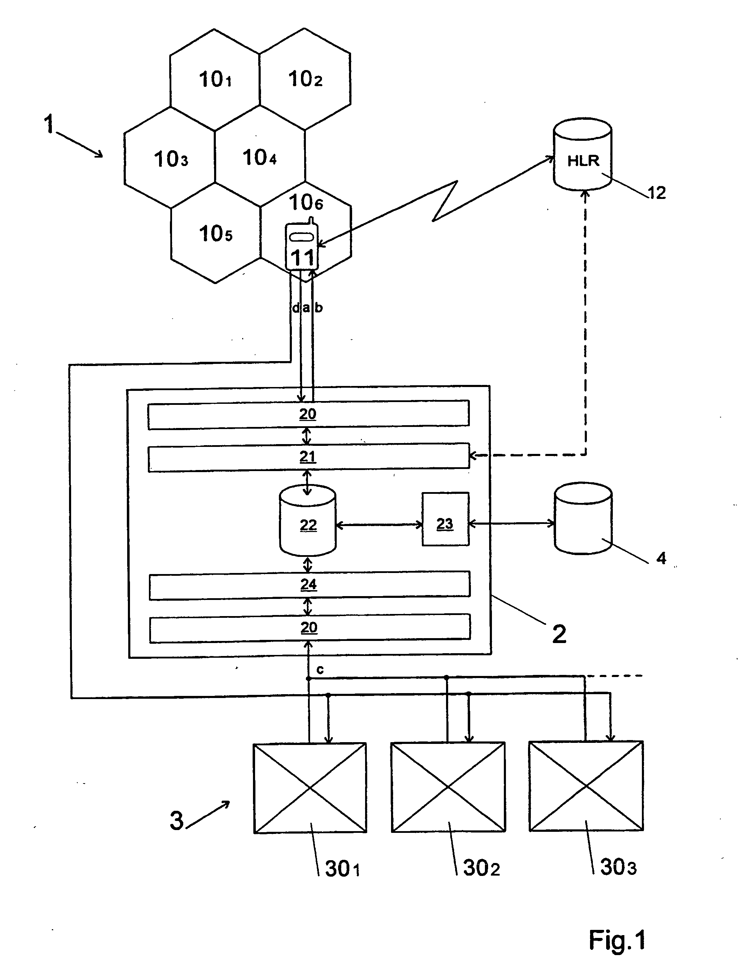

Ein Beispiel für eine Ausführungsvariante der Erfindung wird im Folgenden anhand der Figur 1 erläutert. Mit dem dargestellten Verfahren können Mobilteilnehmer die elektronische Adresse, beispielsweise eine URL-Adresse (Uniform Resource Locator), von standortabhängigen Diensten 3 erhalten und mit den Endgeräten 11 auf diese Dienste 3 zugreifen, ohne ihren Standort den Dienstanbietern 30₁, 30₂, 30₃ mitzuteilen und ohne dass dieser Standort vom Mobilnetzbetreiber an Dritte weitergegeben wird.

Mit dem Bezugszeichen 1 ist ein Mobilnetz dargestellt, in diesem Beispiel ein zellulares Mobilfunknetz. Dieses erstreckt sich über ein Gebiet, das in diesem Beispiel in Zellen 10₁ bis 10₆ eingeteilt ist, welche jeweils von einer Basisstation versorgt werden. In einer Heimatdatei (HLR, Home Location Register) 12 sind alle für jeden Mobilfunkteilnehmer signifikante Informationen gespeichert, unter anderem der momentane Aufenthaltsort (LA, Location Area). Die Heimatdatei 12 wird vom Betreiber des Mobilfunknetzes 1 verwaltet, der auf diese Weise in der Lage ist, den Aufenthaltsort aller Mobilfunkteilnehmer zu kennen.

In konventionellen GSM-Mobilfunknetzen wird nur die Zelle 10, in welcher jeder aktive Teilnehmer sich momentan befindet, in der Heimatdatei 12 gespeichert. Einzelne Zellen 10 können sich jedoch über mehrere Quadratkilometer erstrecken. Es wurde daher schon vorgeschlagen, eine genauere Standortangabe zu ermitteln und in der Heimatdatei 12 zu speichern, wobei diese Angabe beispielsweise anhand eines Triangulationsverfahrens durch Signale in mehreren Nachbarnbasisstationen ermittelt wird. Es wurde auch schon empfohlen, Mobilgeräte mit einer Satelliten-Standortbestimmungsvorrichtung, beispielsweise mit einem GPS-Empfänger (Global Positioning System), zu versehen, damit der Standort der eingeloggten Mobilgeräte genauestens bestimmt werden kann. Diese mit einem GPS-Empfänger ermittelte Standortsangabe kann dann an die Heimatdatei 12 übertragen werden.

Der Fachmann wird verstehen, dass das erfindungsgemässe Verfahren auch in anderen Arten von Mobilnetzen eingesetzt werden kann. Beispielsweise kann das Verfahren auch in einem Fixnetz, beispielsweise einem ISDN-Netz, eingesetzt werden, in welchem der Standort der Anschlüsse der Teilnehmer dem Betreiber des Netzes bekannt ist.

Ein Server 2 steht zur Verfügung, an den Mobilteilnehmer mit Endgeräten 11 Abfragen senden können (Pfeil a). Je nach Art von Mobilnetz und Endgerät 11 können die Abfragen beispielsweise mittels SMS (short message system), USSD (unstructured supplementary service Data), E-Mail, als Nutzdaten im Nutzkanal usw. übertragen werden. In einem Mobilfunknetz 1 werden die Abfragen vorzugsweise gemäss dem WAP-Protokoll (Wireless Application Protocol), oder gemäss HTTP, HTML, XML, abgesandt.

Eine typische Abfrage eines Mobilteilnehmers, der ein Kino in seiner Umgebung sucht, könnte beispielsweise folgendes Format haben (gemäss HTTP Protokoll):
GET http://a.b.c/localservicerequestpath?service=cinema
oder
GET http://a.b.dservice?type=local&service=cinema
wobei a.b.c beispielsweise der Host- und Domain-Name des Betreibers des Servers 2 wäre und localservicerequestpath der Name eines speziellen anzurufenden Diensts, einschliesslich Pfad, wäre.

Eine spezielle Softwareanwendung im Endgerät 11 des Mobilteilnehmers kann ihm helfen, diese Abfrage durchzuführen.

Um eine hohe Vertraulichkeit zu gewährleisten, können die Mobilteilnehmer Abfragen a vorzugsweise mit einer geeigneten Verschlüsselungsapplikation im Endgerät 11 des Mobilteilnehmers oder in einer persönlichen Chipkarte in diesem Endgerät 11 verschlüsseln. Eine kryptographische Einheit 20 im Server 2 kann dann diese Abfrage entschlüsseln.

Der Server 2 umfasst eine Datenbank 22, in welcher die Adressen der angebotenen Dienste 3 gespeichert sind. Diese Adressen werden erfindungsgemäss von einer Vielzahl von privaten Dienstanbietern 30₁, 30₂, 30₃ abgelegt und verwaltet. Zu diesem Zweck können die Dienstanbieter 30 durch ein geeignetes Telekommunikationsnetz, beispielsweise durch ein Fix- oder Mobilnetz, oder durch Internet, auf die Datenbank 22 zugreifen (Pfeil c). Eine optionale kryptographische Einheit 20 ermöglicht die Authentifizierung von Dienstanbietern 30, um sicherzustellen, dass ein Dienstanbieter 30 nur die Adressen seiner eigenen Dienste 3 ändern kann.

Der Fachmann wird verstehen, dass die Datenbank 22 und der Server 2 nicht unbedingt aus einer einzelnen Vorrichtung in einem zentralen Ort bestehen müssen, sondern dass auch dezentralisierte Datenbanken, die auf eine Vielzahl von Servern verteilt sein können, angewendet werden können.

Der Betreiber des Servers 2 kann vorzugsweise eine Gebühr von den Dienstanbietern 30 verlangen, wobei die Gebühr beispielsweise von der Anzahl abgelegter Adressen, von der Ablagedauer, und/oder vom verknüpften Standort abhängig sein kann: In einer Variante haben auch die Dienstanbieter 30 die Möglichkeit, gegen eine zusätzliche Gebühr bestimmte Adressen speziell zu markieren, damit sie beispielsweise in Listen von vergleichbaren Diensten 3 besser sortiert werden oder besser sichtbar sind.

Vorzugsweise können auch einige Adressen auf Initiative des Betreibers des Servers 2 gespeichert werden. Diese Adressen kann er beispielsweise aus einem elektronischen Teilnehmerverzeichnis 4 kopieren.

Die Dienstanbieter 30 können zum Beispiel verschiedene Dienste 3 anhand von WEB- bzw. WAP-Servern oder Sprachservern anbieten. Entsprechend können die Adressen, die in der Datenbank 22 abgelegt werden, beispielsweise URL-Adressen, E-Mail-Adressen und/oder normale Telefonnummer sein.

Erfindungsgemäss wird jede elektronische Adresse mit geographischen Angaben verknüpft, die von den Dienstanbietern 30 definiert werden können und die den geographischen Bereich angeben, wo der Dienst 3 angeboten wird. Wenn der angebotene Dienst 3 die URL eines Restaurants ist, wird beispielsweise der Standort dieses Restaurants in der Datenbank 22 mit dem URL des Restaurants verknüpft.

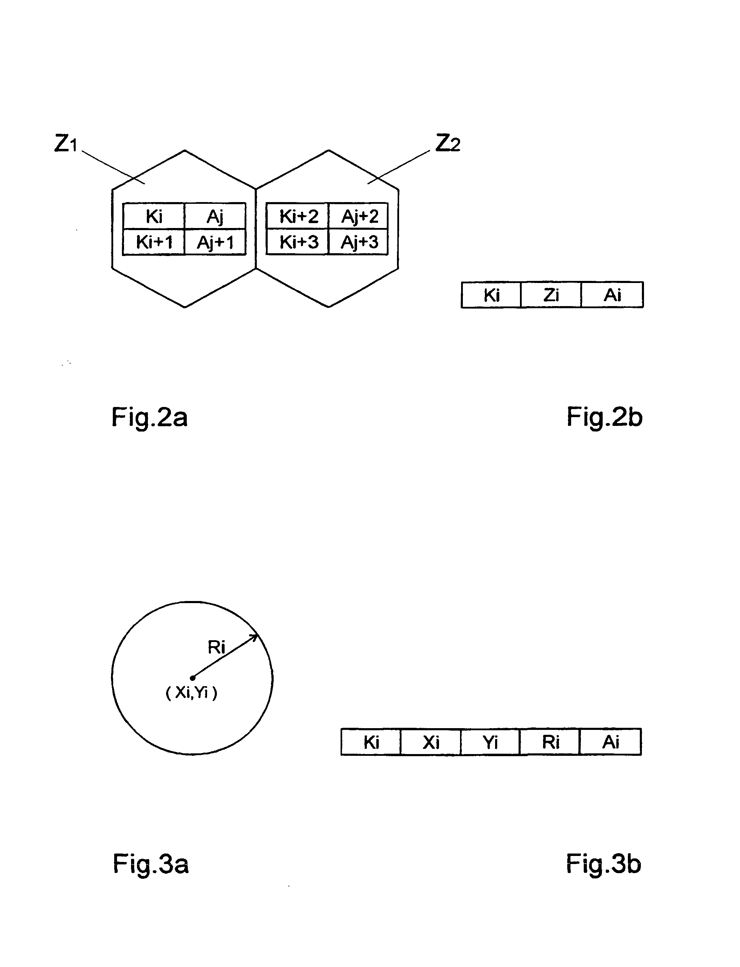

In einer ersten Variante der Erfindung, die in Figur 2a dargestellt ist, werden die Adressen der angebotenen Dienste 3 mit geographischen Angaben in der Form von Zellenangaben (LA, Location Area) in einem Mobilfunknetz 1 verknüpft. Jeder Dienstanbieter 30 gibt an, in welcher Zelle 10 des Mobilfunknetzes 1 er seine Dienste 3 anbieten will.

Da die meisten Dienstanbieter die Topographie des Zellennetzes nicht kennen, haben sie vorzugsweise die Möglichkeit, einfach eine Strassenadresse oder eine Liste von Strassenadressen anzugeben. Diese Strassenadressen werden dann anhand einer Konvertierungstabelle 24 im Server 2 in Zellenangaben (beispielsweise LA, Location Area) konvertiert.

In dieser Variante werden die Angaben der Dienstanbieter 30 vorzugsweise gemäss dem in Figur 2b dargestellten Feldformat in der Datenbank 22 gespeichert. Jeder Eintrag in der Datenbank 22 entspricht einem angebotenen Dienst 3 und umfasst mindestens folgende Felder:
- Eine Kategorieangabe Kᵢ (zum Beispiel Restaurant, Taxi, Wetterdienst usw.);
- Eine Zellenangabe Zᵢ, die angibt, in welcher Zelle 10 des Mobilfunknetzes 1 der Dienst 3 angeboten wird;
- Die Adresse Aᵢ des Dienstes 3, beispielsweise die URL-Adresse des Restaurants, des Taxiunternehmens oder der entsprechenden Wetterdienstseite.

In einer anderen Variante der Erfindung, die in Figur 3a dargestellt ist, wird die Adresse jedes angebotenen Dienstes 3 mit geographischen Koordinaten (xᵢ, yᵢ) verknüpft. Ein Radius Rᵢ um den angegebenen Punkt xᵢ, yᵢ wird vorzugsweise zusätzlich angegeben. Wenn der angebotene Dienst 3 ein Restaurant oder eine Liste von freien Parkplätzen ist, werden beispielsweise der Standort xᵢ, yᵢ des Restaurants und ein Radius Rᵢ von beispielsweise einem Kilometer in der Datenbank 22 abgelegt. Im Fall eines Wetterinformationsdienstes wird man dagegen einen Radius Rᵢ von vielleicht 50 Kilometern angeben. Vorzugsweise ist der vom Serverbetreiber verlangte Preis vom angegebenen Radius Rᵢ abhängig.

In dieser Variante werden die Angaben der Dienstanbieter 30 vorzugsweise gemäss dem in Figur 3b dargestellten Feldformat in der Datenbank 22 gespeichert. Jeder Eintrag in der Datenbank 22 entspricht einem angebotenen Dienst 3 und umfasst neben einer Kategorieangabe Kᵢ und einer Dienstadresse Aᵢ die Koordinaten xᵢ, yᵢ und vorzugsweise den Radius Rᵢ.

Da die meisten Dienstanbieter 30 ihre geographischen Koordinaten nicht kennen, haben sie vorzugsweise die Möglichkeit, einfach eine Strassenadresse oder eine Liste von Strassenadressen anzugeben. Diese Strassenadressen werden dann anhand der Konvertierungstabelle 24 im Server 2 in geographischen Koordinaten xᵢ, yᵢ konvertiert.

Eine wählbare Liste von geographischen Adressen kann dem Dienstanbieter 30 bei der Anmeldung angezeigt werden, in welcher er eine oder eventuell mehrere Strassen selektieren kann.

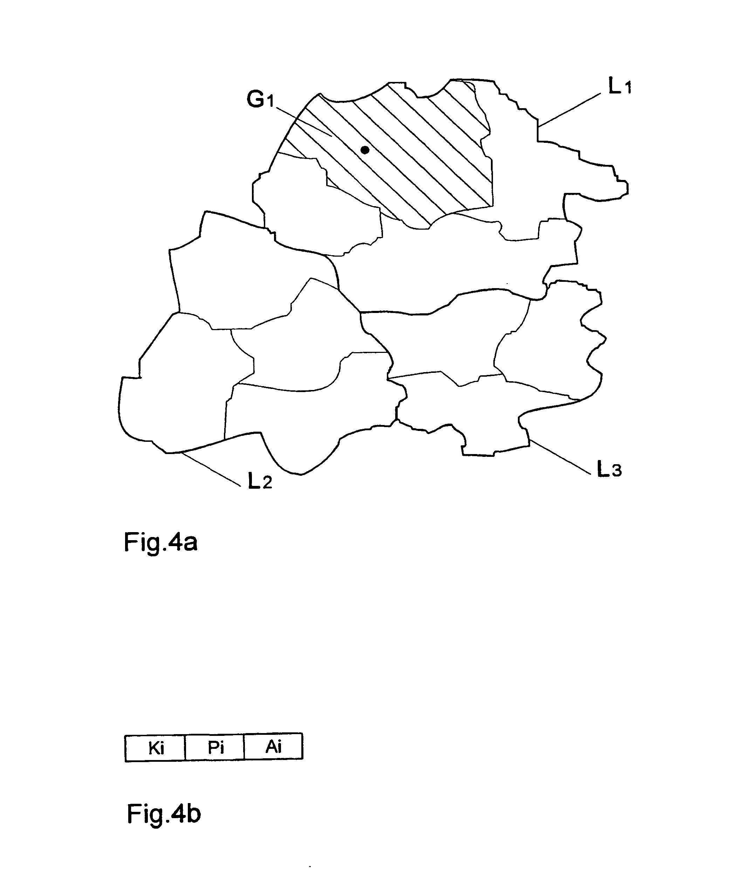

In einer dritten Variante der Erfindung, die in Figur 4a dargestellt ist, werden die Adressen der angebotenen Dienste 3 mit politischen, kulturellen oder sozio-ökonomischen Bereichsangaben Pᵢ verknüpft. Jeder Dienstanbieter 30 gibt den Bereich an, in welchem der Dienst 3 angeboten wird, beispielsweise die Strasse, den Bezirk, die Gemeinde Gᵢ, den Kanton, das Land Lᵢ, das Sprachgebiet, den Staat oder eine Liste von solchen definierten Bereichen.

In dieser Variante werden die Angaben der Dienstanbieter 30 vorzugsweise gemäss dem in Figur 4b dargestellten Feldformat in der Datenbank 22 gespeichert. Jeder Eintrag in der Datenbank 22 entspricht einem angebotenen Dienst 3 und umfasst neben der Kategorieangabe Kᵢ und der Dienstadresse Aᵢ die Angabe eines politisch definierten Bereiches Pᵢ. Diese Variante verlangt keine Konvertierungstabelle 24.

Wenn ein Mobilteilnehmer eine Abfrage in einem der oben angegebenen Formate an den Server 2 sendet, wird zuerst der Standort des Mobilteilnehmers von einem Standortbestimmungsmodul 21 im Server 2 bestimmt. Wie schon erwähnt kann dieser Standort beispielsweise anhand der Heimatdatei 12 des Mobilnetzes ermittelt werden. In einer Variante enthält die Abfrage des Mobilteilnehmers seinen momentanen Standort, der beispielsweise mit einem GPS-Empfänger bestimmt oder auch vom Benutzer eingegeben werden kann. Diese Standortinformation wird dann dem Server 2 übermittelt, entweder vom der Heimatdatei 12 (HLR) von entsprechend dedizierten Location Server, oder vom Gerät des Teilnehmers zusammen mit der Dienstanfrage, und im Standortbestimmungsmodul 21 in ein mit der Datenbank 22 kompatibles Format umgewandelt. Wenn beispielsweise die geographischen Bereiche in der Datenbank 22 politische Bereiche sind, wird die Standortinformation aus der Heimatdatei, beispielsweise eine Zelleninformation LA, anhand einer Tabelle in eine entsprechende Bereichsangabe konvertiert.

In der Datenbank 22 werden dann anhand von Abfragemitteln 23 die Adressen, beispielsweise die URL, von Dienstanbietern 3 gesucht, die Dienste der gewünschten Kategorie anbieten (beispielsweise Kino oder Restaurant) im Bereich, wo sich der Mobilteilnehmer momentan befindet. Eine Antwort wird dann an den Mobilteilnehmer gesandt (Pfeil b); diese Antwort, die optional verschlüsselt wird, enthält vorzugsweise eine Liste mit einer oder mehreren Adressen von Diensten, die den eingegebenen Kriterien entsprechen, beispielsweise eine Liste von URL-Adressen. Der gewünschte Dienst oder der gewünschte Inhalt ist jedoch nicht in der Liste enthalten. Vorzugsweise wird diese Liste nach verschiedenen Kriterien sortiert, beispielsweise nach der Entfernung zwischen dem Standort des Teilnehmers und dem in der Datenbank 22 angegebenen Standort. Diese Liste kann beispielsweise auf einem Browser im Endgerät 11 des Mobilteilnehmers angezeigt werden, so dass der Mobilteilnehmer eine Adresse, beispielsweise eine URL-Adresse, in dieser Liste auswählen kann, um sich direkt mit diesem Dienstanbieter zu verbinden (Pfeil d). Für diese Verbindung braucht er aber seinen Standort nicht dem Dienstanbieter anzugeben.

Wenn die Ergebnisse der Abfrage unzureichend sind, kann erfindungsgemäss der Mobilteilnehmer seine Recherche erweitern, indem er einen Toleranzbereich angibt. Beispielsweise kann der Mobilteilnehmer seine Abfrage anpassen, um die Adressen von allen Diensten der gewünschten Kategorie zu bekommen, die innerhalb eines bestimmten Radius um seinen Standort verfügbar sind - beispielsweise die URL-Adressen von allen chinesischen Restaurants, die sich in einer bestimmten Entfernung befinden. Andere Erweiterungskriterien, beispielsweise Erweiterung der Suche auf alle Nachbar-Funkzellen oder auf die Gemeinde oder auf das ganze Land, können je nach Anwendung auch vorgesehen werden. In diesem Fall kann der Mobilteilnehmer zum Beispiel lokal recherchieren, dann regional, und schliesslich, wenn die Ergebnisse immer noch unzureichend sind, national.

Umgekehrt kann der Mobilteilnehmer vorzugsweise seine Recherche mit geographischen Kriterien verfeinern, wenn er eine zu lange Liste von Adressen erhält. In diesem Fall kann er beispielsweise alle Dienste ausschliessen, die zu weit entfernt sind.

Statt mit der Adresse Aᵢ des Dienstes 3 zu antworten, kann die Datenbank 22 für einige Dienste 3, unter anderem für permanente oder semipermanente Information, direkt mit der gewünschten Information antworten. Diese Variante ist besonders interessant für kleinere Dienstaribieter 30, die keinen eigenen WEB-Server betreiben und die lieber Dienste 3 und Informationen im Server 2 ablegen.

Vorzugsweise enthält der Server 2 ein nicht in den Figuren dargestelltes Logfile-Modul, um eine Statistik über die Anzahl von Abfragen nach einem bestimmten Dienst 3 und nach geographischen Bereichen zu erstellen. Diese Daten können dann den Dienstanbietern 30 zur Verfügung gestellt werden, ohne dass dabei die Identität der abfragenden Teilnehmer mitgeteilt wird.

Vorzugsweise können mehrere Server 2 vorgesehen werden, wobei jeder Server beispielsweise für einen Bereich (beispielsweise für ein Land Lᵢ) und/oder für eine Kategorie Kᵢ von Diensten zuständig ist. Wenn die Adresse eines gesuchten Dienstes 3 in einem Server nicht verfügbar ist, kann dieser Server in diesem Fall mit der Adresse eines anderen Servers, mit welcher die Recherche weiterverfolgt werden kann, antworten. Wenn beispielsweise ein Mobilteilnehmer mit einem bekannten Roamingprozess in einem besuchten Netz eingeloggt ist, wird seine Abfrage a automatisch an den Server 2 des Heimatnetzes weitergeleitet, mit welchem er einen Vertrag hat. In diesem Server sind aber die Adressen von Dienstanbietern im Bereich, über welchen das besuchte Netz sich erstreckt, nicht verfügbar. Dieser Heimatserver kann jedoch erkennen, dass der Mobilteilnehmer sich in einem besuchten Netz befindet und somit mit der Adresse eines entsprechenden Servers im besuchten Netz antworten, beispielsweise mit dessen URL-Adresse. Der Mobilteilnehmer kann dann seine Abfrage automatisch oder manuell an diesen Server im besuchten Gebiet weiterleiten, der dann mit der Adresse des gewünschten Dienstes antworten kann.

Das erfindungsgemässe Verfahren kann eingesetzt werden, wenn der Mobilteilnehmer "absichtlich" eine Abfrage an den Server 2 sendet, oder "automatisch", wenn eine bestimmte Anwendung im Endgerät 11 eine solche Abfrage sendet. In diesem Fall kann auf Initiative des Servers und/oder des Endgeräts 11 der momentane Standort des Teilnehmers kontinuierlich oder periodisch überwacht werden, so dass neue Adressen aus der Datenbank 22 übermittelt werden können, wenn dieser Teilnehmer sich bewegt. Mit diesem Mechanismus können beispielsweise Dienstanbieter 30 relevante lokale Verkehrsinformationen an sich fortbewegende Autofahrer kontinuierlich übermitteln.

### Bezugszeichenliste

- 1: Mobilfunknetz
- 10, 10ᵢ: Zelle des Mobilfunknetzes 1
- 11: Endgerät
- 12: Heimatdatei (HLR)
- 2: Server
- 20: kryptographische Einheit
- 21: Standortbestimmungsmodul
- 22: Datenbank
- 23: Abfragemittel
- 24: Konvertierungstabelle
- 3: Dienst, standortabhängig
- 30, 30ᵢ: Dienstanbieter
- 4: Teilnehmerverzeichnis

- a: Abfrage
- b: Antwort
- c: Zugriff von Dienstanbieter 30 auf Datenbank 22
- d: Verbindung mit Dienstanbieter 30
- Aᵢ: Adressen
- Zᵢ, xᵢ, yᵢ, Rᵢ, Pᵢ: geographische Angabe

## Patentansprüche

1. Verfahren, um Mobilteilnehmern mit Endgeräten (11) Adressen standortabhängiger Dienste (3) anzubieten, ohne den Dienstanbietern (30) den Standort der Mobilteilnehmer mitzuteilen, in welchem:
die Adressen (Aᵢ) einer Vielzahl von Dienstanbietern (30) werden in mindestens einer Datenbank (22) in mindestens einem Server (2) abgelegt,
diese Adressen (Aᵢ) werden in der benannten Datenbank (22) mit geographischen Angaben (Zᵢ; xᵢ, yᵢ, Rᵢ; Pᵢ) verknüpft, die den geographischen Bereich angeben, wo der Dienst (3) angeboten wird,
Mobilteilnehmer, die einen Dienst (3) beanspruchen wollen, senden mit dem Endgerät (11) eine entsprechende Abfrage (a) an den benannten Server (2), wobei die benannte Abfrage (a) eine Dienstkategorie angibt,
der momentane Standort des abfragenden Mobilteilnehmers wird im benannten Server (2) ermittelt,
die Adresse (Aᵢ) des gewünschten Dienstes (3) im Bereich, wo sich der benannte abfragende Mobilteilnehmer befindet, wird in der benannten Datenbank (22) abgefragt,
diese Adresse (Aᵢ) wird an das Endgerät (11) des Mobilteilnehmers übermittelt,
**dadurch gekennzeichnet,**
**dass** die benannten Adressen elektronische Adressen sind,
**dass** eine Vielzahl von Dienstanbietern (30) eine oder mehrere Adressen (Aᵢ) von standortabhängigen Diensten (3) unmittelbar im benannten Server (2) durch ein Telekommunikationsnetz ablege und verwalten,
**dass** die benannten geographischen Angaben (Zᵢ; xᵢ, yᵢ, Rᵢ; Pᵢ) in der benannten Datenbank (22) von den Dienstanbietern (30) definiert und unmittelbar durch ein Telekommunikationsnetz in der Datenbank (22) gespeichert werden,
und sich ein Mobilteilnehmer mit seinem Endgerät (11) durch die übermittelte elektronische Adresse direkt mit dem damit verknüpften Dienst (3) verbindet.

2. Verfahren gemäss dem vorhergehenden Anspruch, **dadurch gekennzeichnet, dass** die benannten Mobilteilnehmer Mobilfunkteilnehmer in einem digitalen Mobilfunknetz (1) sind,
und dass der benannte Server (2) vom Mobilfunkbetreiber verwaltet wird.

3. Verfahren gemäss dem vorhergehenden Anspruch, **dadurch gekennzeichnet, dass** der Standort der Mobilteilnehmer aus der Heimatdatei (HLR) (12) des benannten Mobilfunknetzes (1) ermittelt wird.

4. Verfahren gemäss dem Anspruch 2 oder 3, **dadurch gekennzeichnet, dass** der Standort der Mobilteilnehmer anhand eines Triangulationsverfahrens durch Signale in verschiedenen Basisstationen des benannten Mobilfunknetzes (1) ermittelt wird.

5. Verfahren gemäss einem der vorhergehenden Ansprüche, **dadurch gekennzeichnet, dass** der Standort der Mobilteilnehmer von den Mobilteilnehmern selbst mitgeteilt wird.

6. Verfahren gemäss dem vorhergehenden Anspruch, **dadurch gekennzeichnet, dass** der momentane Standort mit einer Satelliten-Standortbestimmungsvorrichtung im Endgerät (11) des Mobilteilnehmers ermittelt und automatisch mit der benannten Abfrage (a) übermittelt wird.

7. Verfahren gemäss einem der Ansprüche 2 bis 6, **dadurch gekennzeichnet, dass** die benannten geographischen Angaben (Zᵢ) Zellen (10ᵢ) im benannten Mobilfunknetz (1) definieren.

8. Verfahren gemäss einem der Ansprüche 1 bis 6, **dadurch gekennzeichnet, dass** die benannten geographischen Angaben (xᵢ, yᵢ), die in der benannten Datenbank (22) abgelegt sind, geographische Koordinaten sind.

9. Verfahren gemäss dem vorhergehenden Anspruch, **dadurch gekennzeichnet, dass** die benannten geographischen Angaben einen vom Dienstanbieter (30) definierbaren Radius (Rᵢ) umfassen.

10. Verfahren gemäss einem der Ansprüche 1 bis 6, **dadurch gekennzeichnet, dass** die benannten geographischen Angaben eine Strassenadresse umfassen können.

11. Verfahren gemäss einem der Ansprüche 1 bis 6, **dadurch gekennzeichnet, dass** die benannten geographischen Angaben (Pᵢ) politisch, kulturell oder sozio-ökonomisch definierten Bereichen, wie z.B. Strassen, Bezirken, Gemeinden, Kantonen, Ländern, Staaten oder Listen von solchen politisch, kulturell oder sozio-ökonomisch definierten Bereichen, entsprechen.

12. Verfahren gemäss einem der vorhergehenden Ansprüche, **dadurch gekennzeichnet, dass** das Ablegen von elektronischen Adressen den benannten Dienstanbietern verrechnet wird.

13. Verfahren gemäss dem vorhergehenden Anspruch, **dadurch gekennzeichnet, dass** der Preis, der verlangt wird, um elektronische Adressen (Aᵢ) abzulegen, von der Grösse des verknüpften geographischen Bereiches abhängig ist.

14. Verfahren gemäss dem vorhergehenden Anspruch, **dadurch gekennzeichnet, dass** der Preis, der verlangt wird, um elektronische Adressen (Aᵢ) abzulegen, vom Standort des verknüpften geographischen Bereiches abhängig ist.

15. Verfahren gemäss einem der vorhergehenden Ansprüche, **dadurch gekennzeichnet, dass** mindestens einige Adressen (Aᵢ) in der benannten Datenbank (22) vom Betreiber des benannten Servers (2) abgelegt werden.

16. Verfahren gemäss einem der vorhergehenden Ansprüche, **dadurch gekennzeichnet, dass** die benannten elektronischen Adressen (Aᵢ) URL-Adressen sind.

17. Verfahren gemäss einem der vorhergehenden Ansprüche, **dadurch gekennzeichnet, dass** die benannten elektronischen Adressen (Aᵢ) E-Mail-Adressen sind.

18. Verfahren gemäss einem der Ansprüche 2 bis 17, **dadurch gekennzeichnet, dass** die benannten elektronischen Abfragen das WAP-Protokoll (Wireless Application Protocol) benützen.

19. Verfahren gemäss dem vorhergehenden Anspruch, **dadurch gekennzeichnet, dass** eine Anwendung im Endgerät (11) des Mobilteilnehmers ausgeführt wird, um den Dialog zwischen dem benannten Mobilteilnehmer und dem benannten Server (2) zu vereinfachen.

20. Verfahren gemäss einem der vorhergehenden Ansprüche, **dadurch gekennzeichnet, dass** die Authentizität der Dienstanbieter, die Adressen ablegen, mit einer kryptographischen Einheit (20) im benannten Server (2) geprüft wird.

21. Verfahren gemäss einem der vorhergehenden Ansprüche, **dadurch gekennzeichnet, dass** die benannten Abfragen (a) der benannten Mobilteilnehmer verschlüsselt werden und im benannten Server (2) entschlüsselt werden.

22. Verfahren gemäss einem der vorhergehenden Ansprüche, **dadurch gekennzeichnet, dass** der momentane Standort von mindestens gewissen Mobilteilnehmern mitgeführt wird, und dass neue Adressen (Aᵢ) übermittelt werden, wenn diese Mobilteilnehmer sich bewegen.

23. System in einem Mobilnetz (1), umfassend:
eine Datenbank (22) in mindestens einem Server (2), in welcher Adressen (Aᵢ) von Dienstanbietern (30) mit geographischen Angaben (Zᵢ; xᵢ, yᵢ, Rᵢ; Pᵢ) verknüpft sind,
Standortbestimmungsmittel (21), um den Standort von Mobilteilnehmern mit einem Endgerät (11), die Abfragen an den benannten Server (2) senden, zu bestimmen,
Abfragemittel (23), um die Adressen (Aᵢ) von gewünschten Diensten im Bereich, wo sich der benannte abfragende Mobilteilnehmer befindet, in der benannten Datenbank (22) abzufragen,
**gekennzeichnet, durch** Mittel zum unmittelbaren Ablegen und Verwalten der benannten Adressen von einer Vielzahl von Dienstanbietern (30) **durch** ein Telekommunikationsnetz im benannten Server (2), wobei die benannten Adressen elektronischen Adressen sind,
und Mittel zur Definition der benannten geographischen Angaben von den Dienstanbietern in der benannten Datenbank (22), wo der Dienst angeboten wird, **durch** ein Telekommunikationsnetz und,
Mittel zum Übertragen der elektronischen Adresse an das Endgerät (11) des Mobilteilnehmers, so dass sich dieser Mobilteilnehmer mit seinem Endgerät (11) **durch** eine an ihn übermittelte elektronische Adresse direkt mit dem damit verknüpften Dienst verbinden kann.

24. System gemäss Anspruch 23, **dadurch gekennzeichnet, dass** das benannte Mobilnetz (1) ein digitales Mobilfunknetz ist.

25. System gemäss Anspruch 24, **dadurch gekennzeichnet, dass** der Standort der Mobilteilnehmer aus der Heimatdatei (12) des benannten Mobilfunknetzes (1) ermittelbar ist.

26. System gemäss Anspruch 24, **dadurch gekennzeichnet, dass** der momentane Standort mit einer Satelliten-StandortbestimmungsVorrichtung im Endgerät (11) des Mobilteilnehmers ermittelbar und automatisch zusammen mit der benannten Abfrage (a) übermittelbar ist.

27. System gemäss einem der Ansprüche 23 bis 26, **dadurch gekennzeichnet, dass** die benannten geographischen Angaben (Zᵢ) Zellen (10ᵢ) im benannten Mobilfunknetz (1) definieren.

28. System gemäss einem der Ansprüche 23 bis 26, **dadurch gekennzeichnet, dass** die benannten geographischen Angaben (xᵢ, yᵢ), die in der benannten Datenbank (22) abgelegt sind, geographische Koordinaten sind.

29. System gemäss dem vorhergehenden Anspruch, **dadurch gekennzeichnet, dass** die benannten geographischen Angaben einen vom Dienstanbieter (30) definierbaren Radius (Rᵢ) umfassen.

30. System gemäss einem der Ansprüche 23 bis 26 **dadurch gekennzeichnet, dass** die benannten geographischen Angaben eine Strassenadresse umfassen können.

31. System gemäss einem der Ansprüche 23 bis 26, **dadurch gekennzeichnet, dass** die benannten geographischen Angaben (Pᵢ) politisch, kulturell oder sozio-ökonomisch definierten Bereichen, wie z.B. Strassen, Bezirken, Gemeinden, Kantonen, Ländern, Staaten oder Listen von solchen politisch, kulturell oder sozio-ökonomisch definierte Bereichen, entsprechen.

32. System gemäss einem der Ansprüche 23 bis 31, **dadurch gekennzeichnet, dass** die benannten Adressen (Aᵢ) URL-Adressen sind.

33. System gemäss einem der Ansprüche 23 bis 32, **dadurch gekennzeichnet, dass** die benannten Adressen (Aᵢ) E-Mail-Adressen sind.

34. System gemäss einem der Ansprüche 23 bis 33, **dadurch gekennzeichnet, dass** der benannte Server (2) eine kryptographische Einheit (20) umfasst, um die Authentizität der Dienstanbieter zu prüfen.

35. System gemäss einem der Ansprüche 23 bis 33, **dadurch gekennzeichnet, dass** der benannte Server (2) eine kryptographische Einheit (20) umfasst, um die benannten Abfragen (a) der benannten Mobilteilnehmer (11) zu entschlüsseln.

## Claims

1. Method for offering to mobile users with terminals (11) the addresses of location-bound services (3) without communicating the location of the mobile users to the service providers (30), wherein:
the addresses (Aᵢ) of a plurality of service providers (30) are stored in at least one database (22) in at least one server (2),
the addresses (Aᵢ) are linked in said database (22) with geographic indications (Zᵢ; xᵢ, yᵢ; Rᵢ; Pᵢ) that indicate the geographic area where the service (3) is offered,
the mobile users that wish to use a service (3) send with the terminal (11) a corresponding query (a) to said server (2), said query (a) indicating a service category,
the momentary location of the querying mobile user is determined in said server (2),
the address (Aᵢ) of the desired service (3) in the area where said querying mobile user is located is queried in said database (22),
this address (Aᵢ) is transmitted to the terminal (11) of the mobile user,
**characterized in that**
said addresses are electronic addresses,
a plurality of service providers (30) store and administer one or several addresses (Aᵢ) of location-bound services (3) directly in said server (2) through a telecommunication network,
said geographic indications (Zᵢ; xᵢ, yᵢ; Rᵢ; Pᵢ) in said database (22) are defined and stored directly through a telecommunication network in the database (22) by the service providers (30),
and a mobile user connects with his terminal (11) through the transmitted electronic address directly with the service (3) linked therewith.

2. Method according to the preceding claim, **characterized in that** said mobile users are mobile radio users in a digital mobile radio network (1),
and that said server (2) are administered by the mobile radio operator.

3. Method according to the preceding claim, **characterized in that** the location of the mobile user is determined from the home register (HLR) (12) of said mobile radio network (1).

4. Method according to the claim 2 or 3, **characterized in that** the location of the mobile users is determined on the basis of a triangulation process through signals in different base stations of said mobile radio network (1).

5. Method according to one of the preceding claims, **characterized in that** the location of the mobile users are communicated by the mobile users themselves.

6. Method according to the preceding claim, **characterized in that** the momentary location is determined with a satellite location determining device in the terminal (11) of the mobile user and automatically transmitted with said query (a).

7. Method according to one of the claims 2 to 6, **characterized in that** said geographic indications (Zᵢ) define cells (10ᵢ) in said mobile radio network (1).

8. Method according to one of the claims 1 to 6, **characterized in that** said geographic indications (xᵢ, yᵢ) stored in said database (22) are geographic coordinates.

9. Method according to the preceding claim, **characterized in that** said geographic indications include a radius (Rᵢ) definable by the service provider (30).

10. Method according to one of the claims 1 to 6, **characterized in that** said geographic indications can include a street address.

11. Method according to one of the claims 1 to 6, **characterized in that** said geographic indications (Pᵢ) correspond to politically, culturally or socio-economically defined areas, such as e.g. streets, districts, communes, cantons, counties, states or lists of such politically, culturally or socio-economically defined areas.

12. Method according to one of the preceding claims, **characterized in that** the storing of electronic addresses is billed to said service providers.

13. Method according to the preceding claim, **characterized in that** the price that is asked for storing electronic addresses (Aᵢ) depends on the size of the linked geographic area.

14. Method according to the preceding claim, **characterized in that** the price that is asked for storing electronic addresses (Aᵢ) depends on the location of the linked geographic area.

15. Method according to one of the preceding claims, **characterized in that** at least certain addresses (Aᵢ) in said database (22) are stored by the operator of said server (2).

16. Method according to one of the preceding claims, **characterized in that** said electronic addresses (Aᵢ) are URL addresses.

17. Method according to one of the preceding claims, **characterized in that** said electronic addresses (Aᵢ) are e-mail addresses.

18. Method according to one of the claims 2 to 17, **characterized in that** said electronic queries use the WAP protocol (Wireless Application Protocol).

19. Method according to the preceding claim, **characterized in that** an application in the terminal (11) of the mobile user is executed in order to facilitate the dialogue between said mobile user and said server (2).

20. Method according to one of the preceding claims, **characterized in that** the authenticity of the service providers that store addresses are verified with a cryptographic unit (20) in said server (2).

21. Method according to one of the preceding claims, **characterized in that** said queries (a) of said mobile user are encrypted and decrypted in said server (2).

22. Method according to one of the preceding claims, **characterized in that** the momentary location of at least certain mobile users is followed and **in that** new addresses (Aᵢ) are transmitted when these mobile users move.

23. System in a mobile network (1), including:
a database (22) in at least one server (2) in which addresses (Aᵢ) of service providers (30) are linked with geographic indications (Zᵢ; xᵢ, yᵢ; Rᵢ; Pᵢ),
location-determining means (21) for determining the location of mobile users with a terminal (11) who send queries to said server (2),
query means (23) for querying in said database (22) the addresses (Aᵢ) of desired services in the area where said querying mobile user is located,
**characterized by** means for directly storing and administering said addresses by a plurality of service providers (30) through a telecommunication network (3) in said server (2), said addresses being electronic addresses,
and means for defining by the service providers in said database (22) through a telecommunication network said geographic indications where the service is offered, and
means for transmitting the electronic address to the terminal (11) of the mobile user, so that this mobile user can connect with his terminal (11) directly through an electronic address transmitted to him to the service linked thereto.

24. System according to claim 23, **characterized in that** said mobile network (1) is a digital mobile radio network.

25. System according to claim 24, **characterized in that** the location of the mobile user can be determined from the home registry (12) of said mobile radio network (1).

26. System according to claim 24, **characterized in that** the momentary location can be determined with a satellite location determining device in the terminal (11) of the mobile user and automatically transmitted with said query (a).

27. System according to one of the claims 23 to 26, **characterized in that** said geographic indications (Zᵢ) define cells (10ᵢ) in said mobile radio network (1).

28. System according to one of the claims 23 to 26, **characterized in that** said geographic indications (xᵢ, yᵢ) stored in said database (22) are geographic coordinates.

29. System according to the preceding claim, **characterized in that** said geographic indications include a radius (Rᵢ) definable by the service provider (30).

30. System according to one of the claims 23 to 26, **characterized in that** said geographic indications can include a street address.

31. System according to one of the claims 23 to 26, **characterized in that** said geographic indications (Pᵢ) correspond to politically, culturally or socio-economically defined areas, such as e.g. streets, districts, communes, cantons, counties, states or lists of such politically, culturally or socio-economically defined areas.

32. System according to one of the claims 23 to 31, **characterized in that** said addresses (Aᵢ) are URL addresses.

33. System according to one of the claims 23 to 31, **characterized in that** said addresses (Aᵢ) are e-mail addresses.

34. System according to one of the claims 23 to 33, **characterized in that** said server (2) includes a cryptographic unit (20) for verifying the authenticity of the service provider.

35. System according to one of the claims 23 to 33, **characterized in that** said server (2) includes a cryptographic unit (20) for decrypting said queries (a) of said mobile users (11).

## Revendications

1. Procédé pour offrir à des abonnés mobiles avec des terminaux (11) des adresses de services (3) dépendant de l'emplacement, sans communiquer aux fournisseurs de service (30) l'emplacement des abonnés mobiles, dans lequel:
les adresses (Aᵢ) d'une pluralité de fournisseurs de services (30) sont stockées dans au moins une banque de données (22) dans au moins un serveur (2),
ces adresses sont rattachées dans ladite banque de données (22) à des indications géographiques (Zᵢ; xᵢ, yᵢ, Rᵢ; Pᵢ) qui indiquent le territoire géographique où le service (3) est offert,
des abonnés mobiles qui veulent demander un service (3) envoient avec le terminal (11) une interrogation (a) correspondante audit serveur (2), ladite interrogation (a) indiquant une catégorie de service,
l'emplacement instantané de l'abonné mobile interrogeant est déterminé dans ledit serveur (2),
l'adresse (Aᵢ) du service désiré (3) dans le territoire où se trouve ledit abonné mobile interrogeant est demandée dans ladite banque de données (22),
cette adresse (Aᵢ) est transmise au terminal (11) de l'abonné mobile,
**caractérisé**
**en ce que** lesdites adresses sont des adresses électroniques,
**en ce qu'**une pluralité de fournisseurs de services (30) stockent et gèrent une ou plusieurs adresses (Aᵢ) de services (3) dépendant de l'emplacement directement dans ledit serveur (2) à travers un réseau de télécommunication,
**en ce que** lesdites données géographiques (Zᵢ; xᵢ, yᵢ, Rᵢ; Pᵢ) dans ladite banque de données (22) sont définies et mémorisées directement à travers un réseau de télécommunication dans la banque de données (22) par les fournisseurs de services (30),
et un abonné mobile se connecte avec son terminal (11) à travers l'adresse électronique transmise directement au service (3) qui y est rattaché.

2. Procédé selon la revendication précédente, **caractérisé en ce que** lesdits abonnés mobiles sont des abonnés radiomobiles dans un réseau radiomobile numérique (1),
et **en ce que** ledit serveur (2) est géré par l'exploitant radiomobile.

3. Procédé selon la revendication précédente, **caractérisé en ce que** l'emplacement de l'abonné mobile est déterminé à partir du fichier domestique (HLR) (12) dudit réseau radiomobile (1).

4. Procédé selon la revendication 2 ou 3, **caractérisé en ce que** l'emplacement de l'abonné mobile est déterminé au moyen d'un procédé de triangulation par des signaux dans différentes stations de base dudit réseau radiomobile (1).

5. Procédé selon l'une des revendications précédentes, **caractérisé en ce que** l'emplacement des abonnés mobiles est communiqué par les abonnés mobiles eux-mêmes.

6. Procédé selon la revendication précédente, **caractérisé en ce que** l'emplacement instantané est déterminé avec un dispositif de localisation par satellite dans le terminal (11) de l'abonné mobile et transmis automatiquement avec ladite interrogation (a).

7. Procédé selon l'une des revendications 2 à 6, **caractérisé en ce que** lesdites indications géographiques (Zᵢ) définissent des cellules (10ᵢ) dans ledit réseau radiomobile.

8. Procédé selon l'une des revendications 1 à 6, **caractérisé en ce que** lesdites indications géographiques (xᵢ, yᵢ) qui sont stockées dans ladite banque de données sont des coordonnées géographiques.

9. Procédé selon la revendication précédente, **caractérisé en ce que** lesdites indications géographiques comprennent un rayon (Rᵢ) définissable par le fournisseur de services (30).

10. Procédé selon l'une des revendications 1 à 6, **caractérisé en ce que** lesdites données géographiques peuvent comprendre un nom de rue.

11. Procédé selon l'une des revendications 1 à 6, **caractérisé en ce que** lesdites indications géographiques (Pᵢ) correspondent à des territoires politiques, culturels ou socio-économiques définis, comme p. ex. des rues, des quartiers, des communes, des pays, des états, ou à des listes de tels territoires politiques, culturels ou socio-économiques définis.

12. Procédé selon l'une des revendications précédentes, **caractérisé en ce que** le stockage d'adresses électroniques est facturé auxdits fournisseurs de services.

13. Procédé selon la revendication précédente, **caractérisé en ce que** le prix qui est exigé pour stocker des adresses (Ai) dépend de la taille du territoire géographique rattaché.

14. Procédé selon la revendication précédente, **caractérisé en ce que** le prix qui est exigé pour stocker des adresses (Ai) dépend de l'emplacement du territoire géographique rattaché.

15. Procédé selon l'une des revendications précédentes, **caractérisé en ce qu'**au moins quelques adresses (Ai) dans ladite banque de données (22) sont stockées par l'exploitant dudit serveur (2).

16. Procédé selon l'une des revendications précédentes, **caractérisé en ce que** lesdites adresses électroniques (Ai) sont des adresses URL.

17. Procédé selon l'une des revendications précédentes, **caractérisé en ce que** lesdites adresses électroniques (Ai) sont des adresses e-mail.

18. Procédé selon l'une des revendications 2 à 17, **caractérisé en ce que** lesdites interrogations électroniques utilisent le protocole WAP (Wireless Application Protocol).

19. Procédé selon la revendication précédente, **caractérisé en ce qu'**une application dans le terminal (11) de l'abonné mobile est exécutée pour faciliter le dialogue entre ledit abonné mobile et ledit serveur (2).

20. Procédé selon l'une des revendications précédentes, **caractérisé en ce que** l'authenticité des fournisseurs de services qui stockent des adresses est vérifiée avec une unité cryptographique (20) dans ledit serveur (2).

21. Procédé selon l'une des revendications précédentes, **caractérisé en ce que** lesdites interrogations (a) desdits abonnés mobiles sont cryptées et sont décryptées dans ledit serveur (2).

22. Procédé selon l'une des revendications précédentes, **caractérisé en ce que** l'emplacement instantané d'au moins certains abonnés mobiles est suivi, et **en ce que** de nouvelles adresses (Ai) sont transmises lorsque ces abonnés mobiles se déplacent.

23. Système dans un réseau mobile (1), comprenant:
une banque de données (22) dans au moins un serveur (2), dans lequel des adresses (Ai) de fournisseurs de services (30) sont rattachées à des indications géographiques (Zᵢ; xᵢ, yᵢ, Rᵢ; Pᵢ),
des moyens de localisation (21) pour déterminer l'emplacement d'abonnés mobiles avec un terminal (11) qui envoient des interrogations audit serveur (2),
des moyens d'interrogation (23) pour demander, dans la banque de données (22), les adresses (Ai) de services désirés dans le territoire où se trouve ledit abonné mobile interrogeant,
**caractérisé par** des moyens pour le stockage et la gestion directs, dans ledit serveur (2), desdites adresses d'une pluralité de fournisseurs de services (30) à travers un réseau de télécommunication, lesdites adresses étant des adresses électroniques,
et des moyens pour la définition desdites indications géographiques des fournisseurs de services, dans ladite banque de données (22), où le service est offert, à travers un réseau de télécommunication,
et des moyens pour la transmission de l'adresse électronique au terminal (11) de l'abonné mobile,
de sorte que cet abonné mobile puisse se connecter avec son terminal (11), à travers une adresse électronique qui lui a été transmise, directement au service qui y est rattaché.

24. Système selon la revendication 23, **caractérisé en ce que** ledit réseau mobile (1) est un réseau radiomobile numérique.

25. Système selon la revendication 24, **caractérisé en ce que** l'emplacement de l'abonné mobile est déterminable à partir du ficher domestique (12) dudit réseau radiomobile (1).

26. Système selon la revendication 24, **caractérisé en ce que** l'emplacement instantané est déterminable avec une dispositif de localisation par satellite dans le terminal (11) de l'abonné mobile et transmissible automatiquement avec ladite interrogation (a).

27. Système selon l'une des revendications 23 à 26, **caractérisé en ce que** lesdites indications géographiques (Zᵢ) définissent des cellules (10ᵢ) dans ledit réseau radiomobile (1).

28. Système selon les revendications 23 à 26, **caractérisé en ce que** lesdites indications géographiques (xᵢ, yᵢ) qui sont stockées dans ladite banque de données (22) sont des coordonnées géographiques.

29. Système selon la revendication précédente, **caractérisé en ce que** lesdites indications géographiques comprennent un rayon (Rᵢ) définissable par le fournisseur de services (30).

30. Système selon l'une des revendications 23 à 26, **caractérisé en ce que** lesdites indications géographiques peuvent comprendre un nom de rue.

31. Système selon l'une des revendications 23 à 26, **caractérisé en ce que** lesdites indications géographiques (Pᵢ) correspondent à des territoires politiques, culturels ou socio-économiques définis, comme p. ex. des rues, des quartiers, des communes, des pays, des états, ou à des listes de tels territoires politiques, culturels ou socio-économiques définis.

32. Système selon l'une des revendications 23 à 31, **caractérisé en ce que** lesdites adresses (Aᵢ) sont des adresses URL.

33. Système selon l'une des revendications 23 à 32, **caractérisé en ce que** lesdites adresses (Aᵢ) sont des adresses e-mail.

34. Système selon l'une des revendications 23 à 33, **caractérisé en ce que** ledit serveur (2) comprend une unité de cryptographie (20) pour vérifier l'authenticité des fournisseurs de services.

35. Système selon l'une des revendications 23 à 33, **caractérisé en ce que** ledit serveur (2) comprend une unité de cryptographie (20) pour décrypter lesdites interrogations (a) desdits abonnés mobiles (11).
